# EUROPEAN PATENT SPECIFICATION

(11) **EP 2 421 353 B1**
(45) Date of publication and mention of the grant of the patent: **26.06.2013**
(21) Application number: 10711381.3
(22) Date of filing: 25.03.2010
(51) Int. Cl.: A01C 5/06

(54) **COULTER FOR A SEED DRILL**
SÄSCHAR
SOC POUR SEMOIR

(30) Priority: 22.04.2009 SE 0900535
(43) Date of publication of application: 29.02.2012
(73) Proprietor: Väderstad-Verken AB, 590 21 Väderstad (SE)
(72) Inventor: STARK, Crister, 590 21 Väderstad (SE); FRANSSON, Jörgen, 590 21 Väderstad (SE)
(74) Representative: HOFFMANN EITLE
(86) International application number: PCT/EP2010/053915
(87) International publication number: WO 2010/121881

(56) References cited:
- EP-A1- 1 338 187
- DE-U1- 9 002 699
- US-A- 1 883 133

## Description

### Technical field

The present invention relates to a coulter for a seed drill comprising an elongate pipe having an inlet opening at one end for introducing seeds or fertilizer into the pipe and a discharge opening at the opposite end, the discharge opening comprising a bottom portion and a trailing end portion, the trailing end portion extending from the bottom portion in the longitudinal direction of the pipe. The present invention further relates to a seed drill having such a coulter. Such a coulter and seed drill is known from EP-A- 1338187.

### Background of the invention

For more than 100 years, the seed drill in all its forms has used coulters to bring seed or fertilizer into the soil. However, to simplify matters, reference is made only to coulters used for discharging seed below the soil surface (seed coulters) in the following.

In its simplest form, a seed coulter is a pipe that discharges below the soil surface. During forward motion of the seed drill, the seed coulter creates a track or groove - a seed furrow - in the soil. At the same time, some form of metering device releases seeds into the pipe and thereby into the seed furrow. When the soil falls back behind the seed coulter, the seed is covered with soil and has the conditions to germinate and begin developing a new plant. During recent decades, it has become increasingly common to equip seed drills with a pneumatic metering device, i.e. the seed is blown to the seed coulter and through the pipe by a stream of air. This has become both a necessary and practical feature since seed drills have become increasingly large and can be folded to allow for road transport. It is then necessary to have flexible seed hoses that are bendable during folding of the outer sections of the seed drill.

In practice, the seed coulter always has some form of wear protection on its leading edge. This wear protection is designed so as to give the seed coulter as optimal a shape as possible to create the seed furrow in as good a way as is technically achievable. This is nearly always a question of making the seed furrow so that its base (bottom) is as smooth as possible and is at a constant depth from the soil surface. This is to ensure that the seed is placed in the base (bottom) of a seed furrow, preferably in moist soil to give the seed the best conditions for germination.

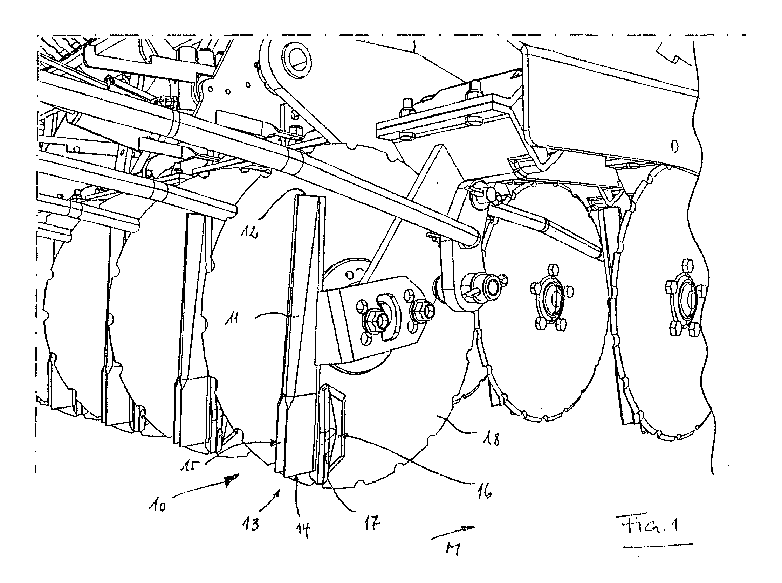

A seed coulter forming the basis of the present invention is shown in Fig. 1 depicting a partial perspective side view of a seed drill having a seed coulter 10. The seed coulter has a certain dimension in the direction of movement M of the seed drill so that the seed has time to be placed in the base of the seed furrow in the wake of the seed coulter before the soil falls back into the seed furrow and covers the seed.
The shown seed coulter 10 comprises an elongate pipe 11 having an inlet opening 12 at one end for introducing seeds into the pipe 11 and a discharge opening 13 at the opposite end. The discharge opening 13 comprises a bottom portion 14 and a trailing end portion (rear opening) 15. Opposite to the trailing portion 15 of the discharge opening 13 is the coulter tip 16 which is disposed at the leading edge of the seed coulter 11 in the direction of movement M of the seed drill. A coulter tip 16 enables placement precision and because of the wear protection 17 of e.g. Tungsten carbide a resistance to wear for a long time. In the shown device the seed coulter interacts with a plate, a so called disc 18. The coulter, however, may as well act as an independent element of the seed drill. Farmers sometimes sow when the soil is moist so that the seed coulter then may be partly covered with wet soil, often in combination with straw and other plant residues. This wet soil tends to impair the function of the seed coulter when clogging the bottom portion 14 of the discharge opening 13 and prevent good metering of the seed. In this case the trailing portion 15 of the discharge opening 13 ensures that the seed can actually exit the pipe. That is, the trailing portion acts as a form of back-up if the seed cannot exit via the bottom portion 14 of the discharge opening 13. The trailing portion 15 further has another function in seed drills using a pneumatic metering device. This kind of seed drills has a relatively high air flow, with air generally flowing at a speed of approximately 20 m/s through the air hose into the pipe of the seed coulter. The air must be able to leave the seed coulter in such a way that it does not carry (blow) the seed with it (up) out of the seed furrow. This is particularly important during drilling of light seed, e.g. oil seed rape or grass seed. The trailing end portion must, thus, have an area such that the seed of the air leaving the seed coulter is not too high. For this purpose a relatively large trailing portion is required. To the contrary, smaller trailing end portions have been used in seed drills having mechanical metering devices, in order to prevent seed from exiting through the trailing end portion and not being placed correctly in the base of the seed furrow.

Accordingly, different seed coulters for seed drills having different metering devices had to be manufactured and handled during production and in spare parts depots.

Furthermore, and depending on the condition of the soil on which the seed drill is used, a larger or smaller trailing end portion may lead to an improved deposition of the seed in the base of the seed furrow either in view of wet soil clogging the bottom portion of the discharge opening or an air flow entraining the seed out of the seed furrow.

In view of the above, it is the object of the present invention to provide a seed coulter which is usable both for seed drills having a pneumatic metering device and seed drills having a mechanical metering device, thus decreasing the handling complexity during production and in spare parts depots as well as providing the possibility to improve the deposition of seed or fertilizer in the furrow depending on the actual conditions (e.g. soil condition, seed depth, type of seed (heavier/lighter) etc.).

The soil is normally moist at the bottom of the seed furrow. To obtain germination, the seed has to be placed in moist soil. If not placed in moist soil, the seed will not germinate until it rains. Hence, it has to be assured that the seeds are timely placed at the bottom of the seed furrow (seed slot).

This object is solved by a coulter having the features defined in claim 1. Embodiments of the present invention are defined in the dependent claims.

The basic idea of the present invention is to make the trailing end portion of the coulter's discharge opening variable in its size so that one and the same coulter may be used for seed drills using, on the one end, pneumatic and, on the other hand, mechanical metering device. Further, this basic idea enables the farmer to adapt the size of the trailing end portion to the corresponding conditions, for example the kind and/or moisture content of the soil or the seed depth, type of seed (heavier/lighter). Normally the tongue 21 is placed low in order to guide down the seed to the bottom of the furrow. But in very wet conditions, it may be required to open up the back (trailing portion) of the coulter's discharge opening to enable continuous drilling.
At very wet conditions, it is not crucial that seed is guided down to the very bottom of the furrow as seed germinate any how because of the high moisture content of the soil.

Therefore, the coulter of the present invention comprises an elongate pipe having an inlet opening at one end for introducing seeds or fertilizer into the pipe and a discharge opening at the opposite end. The inlet opening is preferably configured to be connected to the hose of a pneumatic metering device in which case air is introduced into the pipe via the inlet opening together with seeds or fertilizer or to a mechanical metering device. The discharge opening for discharging or disposing the seed or fertilizer in the corresponding furrow comprises a bottom portion located substantially parallel to the base of the furrow or the direction of movement of the seed drill and a trailing end portion. The trailing end portion is disposed on the side of the trailing edge of the coulter and extends from the bottom portion in the longitudinal direction of the pipe, that is substantially vertical. The coulter of the present invention is characterized by an adjustable closure device which is configured to adjustable cover a proportion of the area of the trailing end portion of the discharge opening. The proportion of the area of the trailing end portion may be in the range between 0% (no coverage) and 100% (full coverage). Because of the inventive configuration a farmer may enlarge the trailing end portion or even entirely open the trailing end portion in wet conditions to ensure that the seed (or fertilizer) actually comes out of the pipe (via the trailing end portion), wherein in these conditions it is not as critical that the seed be placed in the base of the seed furrow since moisture required for germination is present in excess. In drier conditions, the farmer, by adjusting the adjustable closure device, may cover a larger proportion of the trailing end portion in order to prevent seed (or fertilizer) from leaving through the trailing end portion and ensuring that the seed (or fertilizer) is correctly deposited in the base of the furrow. The present invention further provides for an inexpensive and easily exchangeable solution.

As the trailing end portion extends in the longitudinal direction and in most instances will be a longitudinal opening, it is preferred that the closure device is adjustable in the longitudinal direction of the pipe, that is in the longitudinal direction of the trailing end portion.
In this context, it is preferable that the closure device is slidable in the longitudinal direction of the pipe.

In a further preferred embodiment, the closure device is lockable in at least two distinct positions by a locking device, wherein the closure device in the two positions covers a different proportion of the area of the trailing portion of the discharge opening. Hence, one may select the position of the closure device either in dependency of the conditions and/or the type of the used seed drill and fix/lock the closure device in the selected position so that its position is maintained during the use of the coulter/seed drill. In this context, it is preferred that the device used for locking the closure device is such that the closure device may be locked and released without the need of a particular tool, but rather by hand. For example, a catch/recess-combination may be used as a locking device.

Preferably, the closure device comprises an elongate tongue, which is preferably made of a durable plastic material (for example some kind of nylon). In addition, it is preferred that a support is provided for supporting the tongue on the pipe, wherein the tongue is slidably supported in the longitudinal direction of the pipe.

Furthermore, it is preferred that the bottom end of the tongue is bent extending in a direction away from a leading edge of the coulter. In other words, the tongue is bent away from the trailing end portion opposite to the direction of movement of the seed drill. By this configuration, the tongue may have a substantially vertical part (including an angle of up to 30° to the vertical) and a substantially horizontal part (up to 65° to the horizontal) connected by a bent part The bent part preferably has a radius of curvature of 6 to 20 mm, preferably 10 mm. The vertical part guides seed (or fertilizer) down to the bottom portion of the discharge opening and to the base of the seed furrow. The horizontal part prevents seed (or fertilizer) from rebounding back from the base of the furrow and thereby guide down the seed. The seed is held down when the soil falls back into the furrow.

A further preferred embodiment of the present invention comprises a support which extends into a channel formed by the pipe, wherein the channel extends from the inlet opening to the discharge opening. In this embodiment, the support comprises a baffle plate configured to deflect seeds (or fertilizer) within the channel in a direction toward the side of the leading edge of the coulter. That is a face of the support opposite to the leading edge may be angled (an angle between 10° and 45° may be preferred) from the inlet opening toward the discharge opening so that seed in the channel may collide with the baffle plate and be deflected toward the leading edge of the coulter. Further because of this baffle plate, a greater proportion of the seed (or fertilizer) reaches down to the base of the furrow in the leading edge part of the seed coulter and, thus, has more time to come to rest before soil falls back into place.

Furthermore, in order to prevent the closure device from being damaged by stones or other obstacles it is preferable that the closure device is made of an elastic, preferably plastic, material so that the closure device is not plastically deformed or broken due to an impact on the closure device. Further, the elastic feature serves to prevent soil from adhering to the tongue.

Regarding the latter advantage, it is further preferred that the closure device has a lower friction surface which as well can minimize the sticking of wet soil to the tongue.

In addition, if the closure device is adjusted to a position in which the entire trailing end portion is covered (100% proportion) and if a seed coulter having a pneumatic metering device is used air cannot leave the discharge opening at a low speed and the risk exists that the high air speed blows the seed up out of the seed furrow. Accordingly, it may be advantageous to combine the function of the closure device with a function enabling air to be vented out of the seed coulter above the furrow. This according to one embodiment may be achieved by at least one air vent located between the connecting end and the trailing end portion of the discharge opening. This aspect may as well be embodied without the closure device of the invention.

Preferably and in order to prevent the seeds (or fertilizer) to exit through the air vent, the air vent is elongate and narrow having a width between 0.5 and 1.5 mm, preferably around 1 mm.

Additionally or alternatively, the air vent may be covered by a grid, which preferably is made from plastic material as well, in order to prevent the seed (or fertilizer) from exiting through the air vent.

Moreover and as previously mentioned, the present invention also relates to a seed drill having at least one coulter as described above and particularly to a seed drill comprising a pneumatic metering device for metering the seed (or fertilizer) and connected to the inlet opening of the pipe of the coulter by a hose.

Further, features and advantages of the present invention which as such or in combination with one or more of the aforesaid features may be implemented in a coulter will be apparent from the following description of exemplified embodiments of the present invention. In this description, reference is made to the accompanying drawings, in which:
Fig. 1 shows a partial perspective side view of a seed drill having a seed coulter forming the basis of the present invention;
Fig. 2 shows a seed coulter in a perspective side view corresponding to the side view in Fig. 1 and according to one embodiment of the present invention; and
Fig. 3a and 3b show a partial longitudinal cross section of a coulter similar to the one shown in Fig. 2 according to a second embodiment of the present invention with the closure device being in a) a position entirely closing the trailing end portion and b) a position partially covering the trailing end portion.

In the drawings the same parts have been referred to by the same reference numerals.

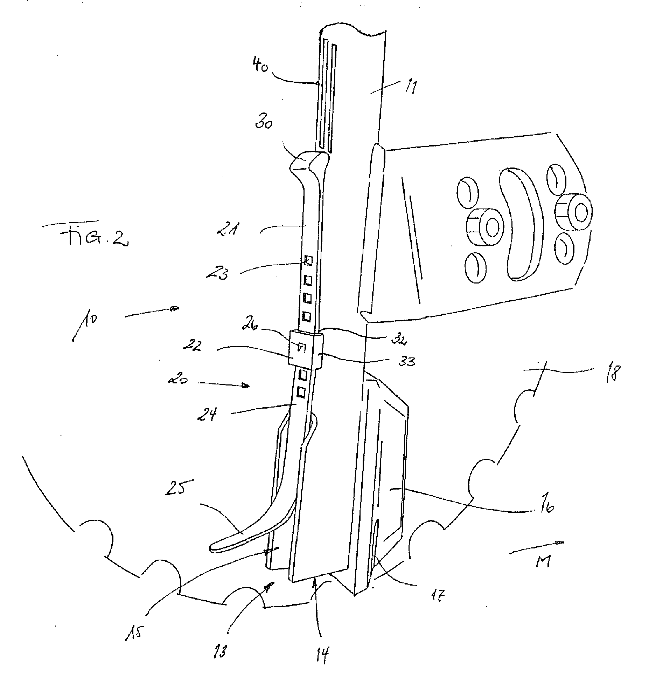

Fig. 2 shows a first embodiment of a coulter 10 in a perspective view. The general configuration of the coulter of Fig. 2 is the same as that of Fig. 1. The coulter 10 has a pipe 11 and in the shown embodiment is fixed to a disc 18 of a seed drill. The inlet opening 12 (not shown in Fig. 2) is connected to the hose of a pneumatic metering device of the seed drill. However, it is as well conceivable to use the shown coulter 10 in combination with a mechanical metering device.

At the end of the pipe 11 opposite to the connecting end 12 a discharge opening 13 is provided. The discharge opening 13 comprises a bottom portion 14 which has a certain extension in the direction of movement M and which is intended to form the main portion through which the seed or fertilizer is discharged from the pipe 11. In this context, it is particularly preferred to discharge the seed or fertilizer at a position of the discharge opening 13 as close to the tip 16 as possible so that the seed has more time to come to rest before the soil falls back into place. In addition, the discharge opening 13 also comprises a trailing end portion 15 disposed at the trailing edge (rear edge) of the pipe 11.
The trailing end portion 15 of the discharge opening 13 has a substantially rectangular elongate shape extending in the longitudinal direction of the pipe 11, wherein the longitudinal direction is defined in the direction from the inlet opening 12 to the discharge opening 13 or vice versa. The trailing end portion may have a longitudinal extension between 10 to 60 mm and a width of 10 to 20 mm. Similarly, the bottom portion 14 has a dimension in the direction M of about 10 to about 60 mm and a width corresponding to the trailing end portion 15.

The remaining parts of the shown coulter 10 such as the tip 16, the wear protection 17, etc. are similar as described with respect to Fig. 1 and an additional description is omitted.

The coulter shown in Fig. 2 further has a closure device 20. The closure device in the shown embodiment consists of a tongue 21 and a support 22.

The tongue 21 is an elongate member extending in the longitudinal direction of the pipe 11. It may have a width smaller than the width of the trailing end portion 15 but may as well be larger than that. In the depicted embodiment the width is slightly smaller than the width of the trailing end portion 15 and the dimension of the pipe 11 in the direction of movement M closer to the inlet opening 12 as seen from the discharge opening 13, that is the upper end of the trailing end portion 15, is smaller than the dimension of the pipe closer to the bottom portion 14. The trailing end portion 15 extends from the larger portion to the smaller portion. Therefore, the tongue 21 may insert from the side of the inlet opening 12 into the trailing end portion 15 of the discharge opening 13.

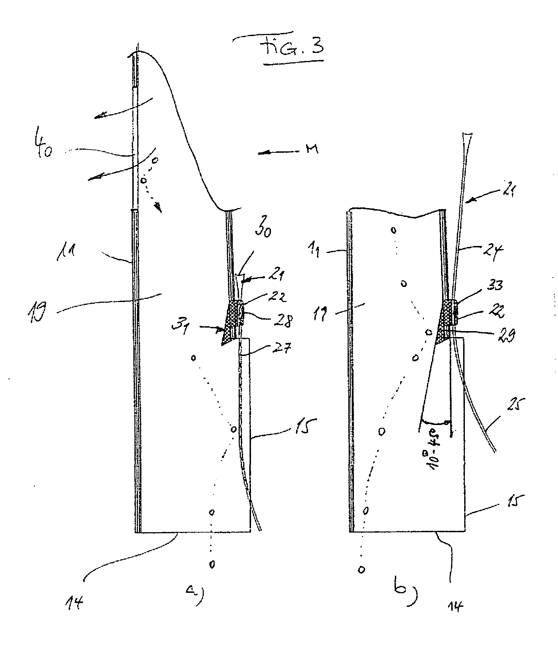

The tongue 21 has a plurality of cutouts 23 with which a snapping protrusion 26 of the support 22 is engagable in order to lock the tongue 21 in a desired position. In the depicted embodiment 8 cutouts 23 are provided so that 8 distinct positions are conceivable. Yet, less than 8 (at least 2) and more than 8 positions (see Fig. 3) are possible.

Furthermore, the tongue 21 consists of a vertical or substantially vertical portion 24 which is substantially parallel to the outer surface of the pipe 11 and a substantially horizontal portion 25 extending in a substantially horizontal direction, that is parallel to the direction of movement M. The tongue 21 is bent between the vertical portion 24 and the horizontal portion 25. As is visible from Fig. 2, the horizontal portion 25 extends in a direction from the leading edge of the coulter 10 to the trailing edge of the coulter 10 that is in the opposite direction of movement M of the seed drill. The length of the horizontal portion 25 may be between 15 to 70 mm.

The tongue 21 is preferably made of a durable and elastic material so as to prevent breakage or plastic deformation of the tongue in use and soil from adhering at the tongue 21. A particularly preferred material is for example some kind of nylon or any other comparable material. Furthermore, the surface of the tongue should have a low friction surface.

The support 22 of the closure device is fixed to the pipe 11. This may be achieved by providing a through hole in the wall of the pipe 11. The through hole may be square, rectangular or circular (also other shapes are conceivable) in shape. Further, an engagement element 33 (not shown) is formed on the side of the support 22 facing the pipe 11 which may be inserted into the through hole in the pipe 11. One possibility may be that the engagement element 33 is press fitted into the hole so that the support 22 is held at the pipe by a frictional connection. From this perspective it is preferred that the engagement element 33 has on its side facing the pipe a flange 29 (Fig. 3) having a greater dimension than the hole in the pipe 11 (and the engagement element 33) and to insert the engagement element 33 of the support 22 from the channel side 19 into the through hole (see Fig. 3). This prevents the support 22 from coming out if the tongue 21 is inserted in the support 22. In other words, the support 22 is held between the flange 29 and the tongue 21.

Furthermore, the support 22 may have a snapping protrusion 26 protruding in a slit 32 formed in the support 22 for receiving the tongue 21. This protrusion 26 may engage with the cutouts 23 of the tongue 21. The tongue 21 is then slidable within the slit 32 of the support 22 and may releasably be locked/fixed in a desired position by means of the protrusion 26/cutout 23 (locking device). Further, the tongue 21 has at its end on the side of the inlet opening 12 an enlarged head 30 preventing the tongue 21 from coming out of the slit of the support 22. The tongue 21 and the support 22 should be easily replaceable if damaged.

Another possibility to lock the support 22 to the pipe 11 may be a mushroom-like catch engaging with a circular opening in the pipe 11.

The second embodiment shown in Fig. 3 differs from the one shown in Fig. 2 in regard of the configuration of the tongue 21 and the support 22 only.

The tongue 21 in Fig. 3 differs from that in Fig. 2 in that the bent portion does not comprise a horizontal part and a vertical part. Rather the tongue 21 is continuously curved from the vertical portion 24 to the horizontal portion 25 angled to the horizontal by approximately 65°. A further difference resides in the configuration of the locking mechanism. In the embodiment in Fig. 3 a plurality of recesses 27 are provided with which a corresponding snapping protrusion 28 engages. In the depicted embodiments 18 recesses 27 are provided so that the tongue 21 may be locked in 18 positions. Yet, it is to be said that the tongue 21 beside the form fit by the engagement of the engaging members 26, 28 with the cutouts 23 and recesses 27, respectively in combination with a friction fit may only be held a friction connection which, however, is inferior to the shown embodiments.

In addition, the support 22 in Fig. 3, as may the support of Fig. 2, extends through a hole in the pipe 11 and into a channel 19 formed by the pipe 11. A face facing the leading edge wall of the channel 19 is angled relative to the vertical from the wall of the pipe 11 on the side of the inlet opening 12 toward the opposite wall of the pipe 11 (on the leading edge side) on the side of the bottom portion 14 of the discharge opening 13. Thereby the face 31 forms a (e.g. wedge-shaped) baffle plate for guiding seed introduced into the channel 19 to the leading edge side of the pipe 11 (see Fig. 3b). The wedge preferably having an angle between 10 to 95° (between a vertical line and the face 31) (see Fig. 3b).

In the following, the function of the embodiments in Fig. 1 and 2 with respect to the closure device is described.

Depending on the soil condition, i.e. wet soil or dry condition and depending on the kind of metering device used (mechanical metering device or pneumatic metering device) the tongue 21 may be slid within the slit 32 of the support 22 in a longitudinal direction from the discharge opening 13 toward the inlet opening 12 and vice versa. Thereby and as shown in Fig. 3a, the tongue 21 may cover a substantial proportion of the trailing end portion 15 or the tongue may release a certain proportion of the trailing end portion 15 as shown in Fig. 3b. The tongue 21 may then be locked (automatically locked) in the selected position by the engagement of the engagement member 26, 28 with the corresponding recess or cutout 23, 27. This may be achieved by hand without using a tool by either pulling or pushing the head portion 30 of the tongue 21 or the opposite end of the tongue 21 in the corresponding position.

In the position of Fig. 3b the trailing end portion 15 is enlarged so that a large amount of air may be discharged through the trailing end portion 15 if a pneumatic metering is selected or if in wet soil conditions a large proportion of the bottom portion 14 is clogged by the soil so that the trailing end portion 15 serves as a kind of a back-up so that the seed can come out.

Alternatively and in case of a mechanical metering device or dry soil condition the tongue may be brought in the position shown in Fig. 3a. In this case most of the trailing end portion 15 is covered or closed by the tongue 21 whereby the risk is reduced that the seed is discharged through the trailing end portion 15 and a more precise deposition of the seed in the furrow is effected. At the same time the tongue 15 deflects the seed in the vertical portion 24 towards the leading edge side of the coulter 10 (Fig. 3a) so that the seeds have more time to rest in the furrow before the soil falls back into the furrow. Furthermore as is more clearly visible from Fig. 2, if air entrains seed already deposited at the base of the furrow, carrying the seed again out of the furrow may be prevented by the horizontal part 25 reflecting the seed back toward the furrow.

Furthermore and as shown in Fig. 3, the pipe 11 may have one or more oblong narrow air vents 40. The air vents 40 preferably extend in the longitudinal direction of the pipe 11 and have a ratio of length to width of at least 60 so that the seed is prevented from exiting through the air vent 40. The width of the air vent resides between 0.5 and 1.5 mm and is preferably 1 mm. In addition, a (not shown) grid may close the air vents 40. In the depicted embodiment, the air vent 40 is preferably formed at the leading edge side of the coulter 10. The air vent 40 may, however, also be formed on the trailing edge side as shown in Fig. 2 or on both sides or even at the sides of the pipe in a direction between the leading and trailing edge side. Moreover, a plurality of preferably parallel air vents 40 may be formed in the pipe 11.

The embodiment described here increases the cost of the "given" seed coulter extremely marginally, while improving its function greatly through the addition of two small parts (support 22 and tongue 21).

At the same time, the coulter of the present invention enables one to adapt the trailing end portion 15 of the discharge opening 13 to the actual conditions (the soil conditions (wet, dry, etc.)) or the kind of seed drill used (mechanical or pneumatical metering device). Hence, one and the same coulter may be used for different kinds of seed drills, however, leading to a corresponding result as if the seed coulters would be adapted to the corresponding machines. Hence, the coulter of the present invention enables one to reduce the handling processes of seed coulters in production and spare part distribution. Moreover, the present invention enables one to adapt the seed coulter to changing conditions of soil so as to obtain an optimum seeding or fertilizing result at minimum costs and labor. Hence, the present invention provides a substantial improvement compared with the existing prior art.

## Claims

1. Coulter (10) for a seed drill comprising:
an elongate pipe (11) having an inlet opening (12) at one end for introducing seeds or fertilizer into the pipe (11) and a discharge opening (13) at the opposite end, the discharge opening (13) comprising a bottom portion (14) and a trailing end portion (15), the trailing end portion (15) extending from the bottom portion (14) in the longitudinal direction of the pipe (11), **characterised in that**
an adjustable closure device (20) is configured to adjustably cover a proportion of the area of the trailing end portion (15) of the discharge opening (13).

2. Coulter (10) as set forth in claim 1, wherein the closure device (20) is adjustable in the longitudinal direction of the pipe (11).

3. Coulter (10) as set forth in any one of the preceding claims, wherein the closure device (20) is lockable in at least two positions in which the closure device (20) covers a different proportion of the area of the trailing portion of the discharge opening (13).

4. Coulter (10) as set forth in any one of the preceding claims, wherein the closure device (20) comprises an elongate tongue (21) and a support (22) for supporting the tongue (21) on the pipe (11), the tongue (21) being slidably supported in the longitudinal direction of the pipe (11).

5. Coulter (10) as set forth in claim 4, wherein a bottom end of the tongue (21) is bent in a direction away from a leading edge of the coulter (10).

6. Coulter (10) as set forth in any one of claims 4 to 5, wherein the support (22) extends into a channel (19) formed by the pipe (11) and extending from the inlet opening (12) to the discharge opening (13), the support (22) comprising a baffle plate configured to deflect seeds or fertilizer within the channel (19) in a direction towards a leading edge of the coulter (10).

7. Coulter (10) as set forth in any one of the preceding claims, wherein the closure device (20) is elastic.

8. Coulter (10) as set forth in any one of the preceding claims, wherein the closure device (20) has a low friction surface.

9. Coulter (10) as set forth in any one of the preceding claims, wherein the pipe (11) has at least one air vent (40) located between the connecting end (12) and the trailing end portion (15) of the discharge opening (13).

10. Coulter (10) as set forth in claim 9, wherein the air vent (40) is elongate having a width between 0.5 mm and 1.5 mm, preferably about 1 mm.

11. Coulter (10) as set forth in claim 9 or 10, wherein the air vent (40) is covered by a grid.

12. Seed drill having at least one coulter (10) as set forth in any one of the preceding claims.

13. Seed drill as set forth in claim 12, wherein the seed drill comprises a pneumatic metering device for metering the seed or fertilizer and connected to the inlet opening end (12) of the pipe (11) of the coulter (10) by a hose.

## Patentansprüche

1. Säschar (10) mit:
einem länglichen Rohr (11), das eine Eingangsöffnung (12) an einem Ende zum Einführen von Saatgut oder Düngemittel in das Rohr (11) und eine Austrittsöffnung (13) an dem gegenüberliegenden Ende aufweist, wobei die Austrittsöffnung (13) einen Bodenbereich (14) und einen Nachlaufendbereich (15) aufweist, wobei sich der Nachlaufendbereich (15) von dem Bodenbereich (14) in die Längsrichtung des Rohres (11) erstreckt, **dadurch gekennzeichnet, dass**
eine anpassbare Schließeinrichtung (20) ausgestaltet ist, verstellbar einen Flächenanteil des Nachlaufendbereichs (15) der Austrittsöffnung (13) zu bedecken.

2. Säschar (10) nach Anspruch 1, bei der die Schließeinrichtung (20) in die Längsrichtung des Rohres (11) verstellbar ist.

3. Säschar (10) nach einem der vorhergehenden Ansprüche, bei der die Schließeinrichtung (20) in mindestens zwei Positionen, in welchen die Schließeinrichtung (20) einen unterschiedlichen Flächenanteil des Nachlaufbereiches der Austrittsöffnung (13) bedeckt, arretierbar ist.

4. Säschar (10) nach einem der vorhergehenden Ansprüche, bei der die Schließeinrichtung (20) eine längliche Zunge (21) und eine Stütze (22) zum Abstützen der Zunge (21) an dem Rohr (11) aufweist, wobei die Zunge (21) verschiebbar in die Längsrichtung des Rohres (11) gelagert ist.

5. Säschar (10) nach Anspruch 4, bei der ein Bodenende der Zunge (21) in eine Richtung weg von einer Führungskante der Säschar (10) gebogen ist.

6. Säschar (10) nach einem der Ansprüche 4 bis 5, bei der die Stütze (22) sich in einen Kanal (19) erstreckt, der durch das Rohr (11) ausgebildet ist, und sich von der Eingangsöffnung (12) zu der Austrittsöffnung (13) erstreckt, wobei die Stütze (22) eine Ablenkplatte aufweist, die ausgestaltet ist, Saatgut oder Düngemittel innerhalb des Kanales (19) in eine Richtung der Führungskante der Säschar (10) abzulenken.

7. Säschar (10) nach einem der vorhergehenden Ansprüche, bei der die Schließeinrichtung (20) elastisch ist.

8. Säschar (10) nach einem der vorhergehenden Ansprüche, bei der die Schließeinrichtung (20) eine Oberfläche mit geringer Reibung aufweist.

9. Säschar (10) nach einem der vorhergehenden Ansprüche, bei der das Rohr (11) mindestens eine Belüftungsöffnung (40) aufweist, die zwischen dem Verbindungsende (12) und dem Nachlaufendbereich (15) der Austrittsöffnung (13) angeordnet ist.

10. Säschar (10) nach Anspruch 9, bei der die Belüftungsöffnung (40) länglich ist und eine Breite zwischen 0,5 mm und 1,5 mm, vorzugsweise etwa 1 mm aufweist.

11. Säschar (10) nach Anspruch 9 oder 10, bei der die Belüftungsöffnung (40) durch ein Gitter bedeckt ist.

12. Sämaschine mit mindestens einer Schar (10) nach einem der vorhergehenden Ansprüche.

13. Sämaschine nach Anspruch 12, wobei die Sämaschine eine pneumatische Dosiereinrichtung zum Dosieren des Saatguts oder des Düngemittels aufweist und mit dem Eintrittsöffnungsende (12) des Rohres (11) der Schar (10) durch einen Schlauch verbunden ist.

## Revendications

1. Coutre (10) pour un semoir en ligne comprenant :
un tuyau allongé (11) ayant une ouverture d'entrée (12) au niveau d'une extrémité pour l'introduction de semences ou d'engrais dans le tuyau (11) et une ouverture de décharge (13) au niveau de l'extrémité opposée, l'ouverture de décharge (13) comprenant une partie inférieure (14) et une partie d'extrémité arrière (15), la partie d'extrémité arrière (15) s'étendant à partir de la partie inférieure (14) dans la direction longitudinale du tuyau (11), **caractérisé en ce que**
un dispositif de fermeture réglable (20) est configuré pour couvrir de manière réglable une proportion de la surface de la partie d'extrémité arrière (15) de l'ouverture de décharge (13).

2. Coutre (10) selon la revendication 1, dans lequel le dispositif de fermeture (20) est réglable dans la direction longitudinale du tuyau (11).

3. Coutre (10) selon l'une quelconque des revendications précédentes, dans lequel le dispositif de fermeture (20) peut être verrouillé dans au moins deux positions dans lesquelles le dispositif de fermeture (20) couvre une proportion différente de la surface de la partie arrière de l'ouverture de décharge (13).

4. Coutre (10) selon l'une quelconque des revendications précédentes, dans lequel le dispositif de fermeture (20) comprend une languette allongée (21) et un support (22) destiné à supporter la languette (21) sur le tuyau (11), la languette (21) étant supportée en coulissement dans la direction longitudinale du tuyau (11).

5. Coutre (10) selon la revendication 4, dans lequel une extrémité inférieure de la languette (21) est courbée dans une direction éloignée d'un bord d'attaque du coutre (10).

6. Coutre (10) selon l'une quelconque des revendications 4 à 5, dans lequel le support (22) s'étend dans un canal (19) formé par le tuyau (11) et s'étendant de l'ouverture d'entrée (12) à l'ouverture de décharge (13), le support (22) comprenant une plaque de déviation configurée pour dévier les semences ou les engrais dans le canal (19) dans une direction vers un bord d'attaque du coutre (10).

7. Coutre (10) selon l'une quelconque des revendications précédentes, dans lequel le dispositif de fermeture (20) est élastique.

8. Coutre (10) selon l'une quelconque des revendications précédentes, dans lequel le dispositif de fermeture (20) présente une surface à faible frottement.

9. Coutre (10) selon l'une quelconque des revendications précédentes, dans lequel le tuyau (11) comporte au moins un évent d'aération (40) situé entre l'extrémité de raccordement (12) et la partie d'extrémité arrière (15) de l'ouverture de décharge (13).

10. Coutre (10) selon la revendication 9, dans lequel l'évent d'aération (40) est allongé et ayant une largeur comprise entre 0,5 mm et 1,5 mm, de préférence d'environ 1 mm.

11. Coutre (10) selon la revendication 9 ou 10, dans lequel l'évent d'aération (40) est recouvert par une grille.

12. Semoir en ligne comportant au moins un coutre (10) selon l'une quelconque des revendications précédentes.

13. Semoir en ligne selon la revendication 12, dans lequel le semoir en ligne comprend un dispositif de dosage pneumatique permettant de doser les semences ou les engrais et relié à l'extrémité d'ouverture d'entrée (12) du tuyau (11) du coutre (10) par un tuyau flexible.
